# EUROPEAN PATENT SPECIFICATION

(11) **EP 4 549 247 B1**
(45) Date of publication and mention of the grant of the patent: **15.07.2026**
(21) Application number: 24207229.6
(22) Date of filing: 17.10.2024
(51) Int. Cl.: B60Q 1/00, B60Q 1/14

(54) **LIGHT CONTROL DEVICE**
LICHTSTEUERUNGSVORRICHTUNG
DISPOSITIF DE COMMANDE DE LUMIÈRE

(30) Priority: 02.11.2023 JP 2023188661
(43) Date of publication of application: 07.05.2025
(73) Proprietor: TOYOTA JIDOSHA KABUSHIKI KAISHA, Aichi-ken, 471-8571 (JP)
(72) Inventor: WAKAMATSU, Yasunori, TOYOTA-SHI, AICHI-KEN, 471-8571 (JP); SUGIMOTO, Tsuyoshi, TOYOTA-SHI, AICHI-KEN, 471-8571 (JP); INOUE, Fumio, TOYOTA-SHI, AICHI-KEN, 471-8571 (JP); FUJITA, Teruyoshi, TOYOTA-SHI, AICHI-KEN, 471-8571 (JP); KOBAYASHI, Sei, TOYOTA-SHI, AICHI-KEN, 471-8571 (JP)
(74) Representative: Cabinet Beau de Loménie

(56) References cited:
- EP-A1- 3 640 088
- DE-A1- 102014 011 118
- JP-A- 2020 062 929
- JP-A- 2023 150 252
- US-A1- 2017 297 475
- US-A1- 2021 284 060

## Description

### BACKGROUND

### Technical Field

The present invention relates to a light control device.

### Related Art

JP 2020-062929 A or EP 3 640 088 A discloses a lever switch including a momentary mechanism that automatically returns a rotary operator provided at a distal end portion of a lever main body to an automatic light position when there is no longer a rotation operation force at a position between the automatic light position and a light OFF position. Japanese Patent Application Laid-Open (JP-A) No. 2020-062929 also discloses transitioning from a lights-completely-on state to a vehicle width light state, and further transitioning from a vehicle width light state to a lights-completely-off state, in a case in which the duration of an OFF operation that causes the rotary operator to be held at the light OFF position is longer than or equal to a predetermined time period.

In the technology described in JP 2020-062929 A or EP 3640088 A, in a case in which an OFF operation of holding the rotary operator at the light OFF position is performed by a user, based on a duration of the OFF operation, an instruction intended by the user is determined. This necessitates the user to continue the OFF operation for a period of time corresponding to the intended instruction, and therefore, there is a possibility of an operation error occurring during a period of time until, for example, the user learns the procedure of an operation.

### SUMMARY

The present invention provides a light control device capable of suppressing occurrence of an operation error.

A light control device according to a first aspect is defined in claim 1.

In the first aspect, the light control section performs control so as to deactivate the automatic light mode and switch to the small light lighting mode in a case in which the rotary operator is at the small light position for a first period time in accordance with a predetermined peripheral environment and state of a vehicle, and to deactivate the automatic light mode and switch to the light off mode in which lights are completely turned off in a case in which the rotary operator is at the small light position for a second period of time that is longer than the first period of time in accordance with a predetermined peripheral environment and state of a vehicle. For this reason, there is a possibility that an operation error may arise during a period of time until, for example, the procedure of an operation is acquired.

In this regard, in the first aspect, in a case in which the rotary operator is held at the small light position, in accordance with a peripheral environment and a state of a vehicle, one of the following is performed: (1) causing display of, at the display device, the operation condition of holding the rotary operator for the first period of time for switching to the small light lighting mode and the operation condition of holding the rotary operator for the second period of time for switching to the light off mode, (2) causing display of, at the display device, the operation condition of holding the rotary operator for the first period of time for switching to the small light lighting mode, or (3) not causing display of an operation condition at the display device. This enables the user to recognize the operation condition by visually checking the operation condition that is displayed at the display device, enabling the occurrence of an operation error to be suppressed even until the user learns the procedure of an operation.

The above-described (1) to (3) are selected in accordance with the peripheral environment and the state of the vehicle. This enables (2) to be selected in a case in which, for example, the peripheral environment and the state of the vehicle are conditions under which although switching to the small light lighting mode may be instructed, switching to the light off mode is not instructed. Further, in a case in which the peripheral environment and the state of the vehicle are conditions under which neither switching to the small light lighting mode nor switching to the light off mode is instructed, (3) can be selected. This enables the display at the display device to be suppressed from becoming complicated.

A second aspect is the first aspect, wherein, in a case in which the rotary operator is held at the small light position and a peripheral luminance exceeds a predetermined value, or in a case in which the rotary operator is held at the small light position, the peripheral luminance is less than or equal to the predetermined value, and a drive system of the vehicle is suspended or a shift position is in parking or a parking brake is in operation, the light control section performs processing to (1) cause display of, at the display device, the operation condition for switching to the small light lighting mode and the operation condition for switching to the light off mode.

The condition "in a case in which a peripheral luminance exceeds a predetermined value" and the condition "the peripheral luminance is less than or equal to the predetermined value, and a drive system of the vehicle is suspended or a shift position is in parking or a parking brake is in operation" in the second aspect are conditions under which switching to the small light lighting mode or switching to the light off mode may be instructed. In this case, selecting the above-described (1) enables appropriate display at the display device.

A third aspect is the first aspect, wherein, in a case in which the rotary operator is held at the small light position, a peripheral luminance is less than or equal to a predetermined value, a shift position is not in parking, and a parking brake is not in operation, the light control section performs processing to (2) cause display of, at the display device, the operation condition for switching to the small light lighting mode.

The condition in the third aspect that "a peripheral luminance is less than or equal to a predetermined value, a shift position is not in parking, and a parking brake is not in operation" is a condition under which although switching to the small light lighting mode may be instructed, switching to the light off mode is not instructed. In this case, selecting the above-described (2) enables appropriate display at the display device.

A fourth aspect is the first aspect, wherein, in a case in which the rotary operator is held at the small light position, a peripheral luminance is less than or equal to a predetermined value, and a vehicle speed is greater than or equal to a predetermined vehicle speed, the light control section does (3) not cause display of an operation condition at the display device.

The condition in the fourth aspect that "a peripheral luminance is less than or equal to a predetermined value, and a vehicle speed is greater than or equal to a predetermined vehicle speed" is a condition under which neither switching to the small light lighting mode nor switching to the light off mode is instructed. In this case, selecting the above-described (3) enables appropriate display at the display device.

According to the present invention, occurrence of an operation error can be suppressed.

### BRIEF DESCRIPTION OF THE DRAWINGS

An exemplary embodiment of the present invention will be described in detail based on the following figures, wherein:
Fig. 1 is a block diagram illustrating a schematic configuration of an onboard system according to an exemplary embodiment;
Fig. 2 is a perspective view illustrating an operation lever;
Fig. 3 is a flowchart illustrating light control processing executed by a light control ECU;
Fig. 4A is a conceptual diagram illustrating a state in which a rotary operator of an operation lever has been rotated to a small light position;
Fig. 4B is a conceptual diagram illustrating a state in which a rotary operator of an operation lever is held at a small light position;
Fig. 5A is a conceptual diagram illustrating an operation method that is displayed at a display device in a case in which a peripheral luminance exceeds a predetermined value, or in a case in which a peripheral luminance is less than or equal to a predetermined value, and a drive system of a vehicle is suspended or a shift position is in parking or a parking brake is in operation; and
Fig. 5B is a conceptual diagram illustrating an operation method that is displayed at a display device under the conditions that a peripheral luminance is less than or equal to a predetermined value, a shift position is not in parking, and a parking brake is not in operation.

### DETAILED DESCRIPTION

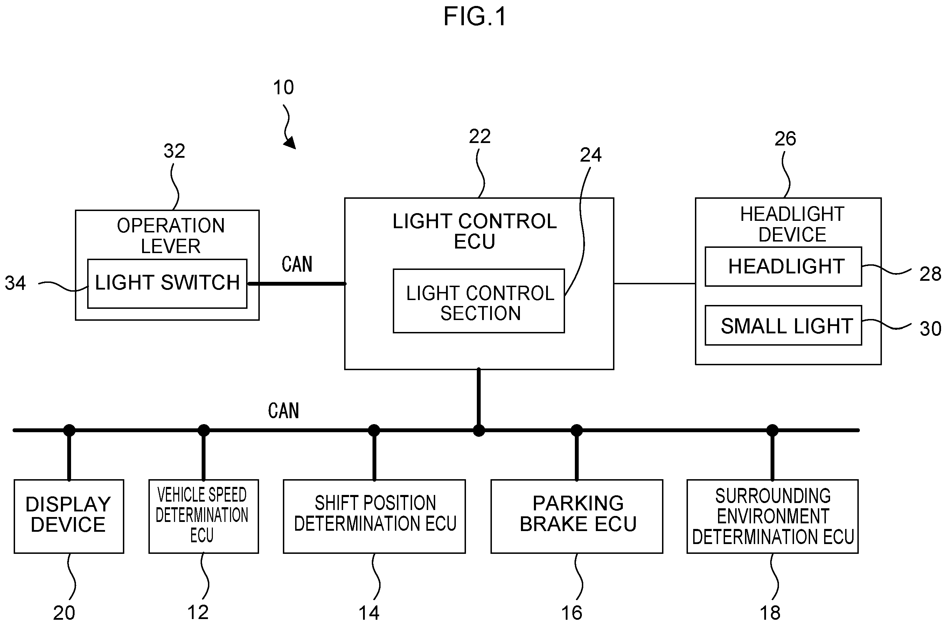

Detailed explanation follows of an example of an exemplary embodiment of the present invention, with reference to the drawings. An onboard system 10 illustrated in Fig. 1 is installed at a vehicle, and includes a vehicle speed determination electronic control unit (ECU) 12, a shift position determination ECU 14, a parking brake ECU 16, a surrounding environment determination ECU 18, a display device 20, and a light control ECU 22. The vehicle speed determination ECU 12, the shift position determination ECU 14, the parking brake ECU 16, the surrounding environment determination ECU 18, the display device 20, and the light control ECU 22 are connected via a communication line (for example, a controller area network (CAN) bus).

Although not illustrated in the drawings, the above-described ECUs respectively include a central processing unit (CPU), memory such as read only memory (ROM), or random access memory (RAM), and a non-volatile storage section such as a hard disk drive (HDD) or a solid state drive (SSD).

The vehicle speed determination ECU 12 acquires a detection signal from a vehicle speed sensor, which is not illustrated in the drawings, and determines a vehicle speed of the vehicle based on the acquired detection signal. The shift position determination ECU 14 acquires a detection signal from a shift position sensor, which is not illustrated in the drawings, and determines a shift position of the vehicle based on the acquired detection signal. The parking brake ECU 16 acquires a detection signal from a parking brake sensor, which is not illustrated in the drawings, and determines an operating state (in operation/not in operation) of a parking brake of the vehicle based on the acquired detection signal.

The surrounding environment determination ECU 18 acquires a detection signal from a sensor, which is not illustrated in the drawings, that detects the luminance around the vehicle, and based on the acquired detection signal, determines the luminance around the vehicle as the surrounding environment of the vehicle. As the above-described sensors, a luminance sensor that is provided at the vehicle in order to perform automatic-light control in which a headlight of the vehicle is turned on and off in accordance with the luminance around the vehicle, or a camera that is provided at the vehicle to image the surroundings of the vehicle, can be applied.

It should be noted that the surrounding environment determination ECU 18 may be configured to estimate the luminance around the vehicle by acquiring weather information from an external weather information server or the like, and determining day and night from the acquired weather information and/or determining the weather to be fine weather, cloudy weather or the like. Further, the surrounding environment determination ECU 18 may be configured to estimate the luminance around the vehicle by acquiring a current position of the vehicle from, for example, a global navigation satellite system (GNSS) device, and determining whether or not the vehicle is traveling through a tunnel.

The display device 20 is a display that enables the light control ECU 22 to display an operation method of an operation lever 32 for deactivating an automatic light mode. As the display device 20, for example, a meter display provided at an instrument panel of the vehicle can be applied. A light switch 34, which is incorporated at the operation lever 32, is connected to the light control ECU 22 via a communication line such as a CAN bus, and a headlight device 26 is also connected to the light control ECU 22. The headlight device 26 is provided with a headlight 28 and a small light (also referred to as a position light) 30.

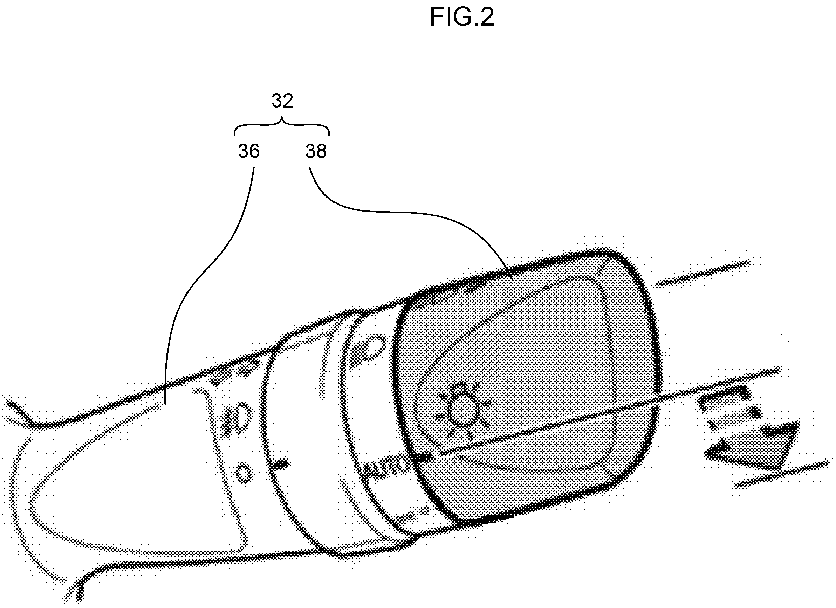

As illustrated in Fig. 2, the operation lever 32 includes a lever main body 36 and a rotary operator 38. The lever main body 36 is a rod-shaped member, and is supported at a side portion of a steering column of the vehicle such that the lever main body 36 is able to operate to tilt in a vehicle front-rear direction and a vehicle vertical direction. **In** a case in which the axis of the lever main body 36 is tilted, the light control ECU 22 switches the optical axis of the headlight 28 or turns on or off a turn signal lamp in accordance with a direction in which the lever main body 36 is tilted. The light switch 34 is incorporated at the lever main body 36 (see Fig. 1).

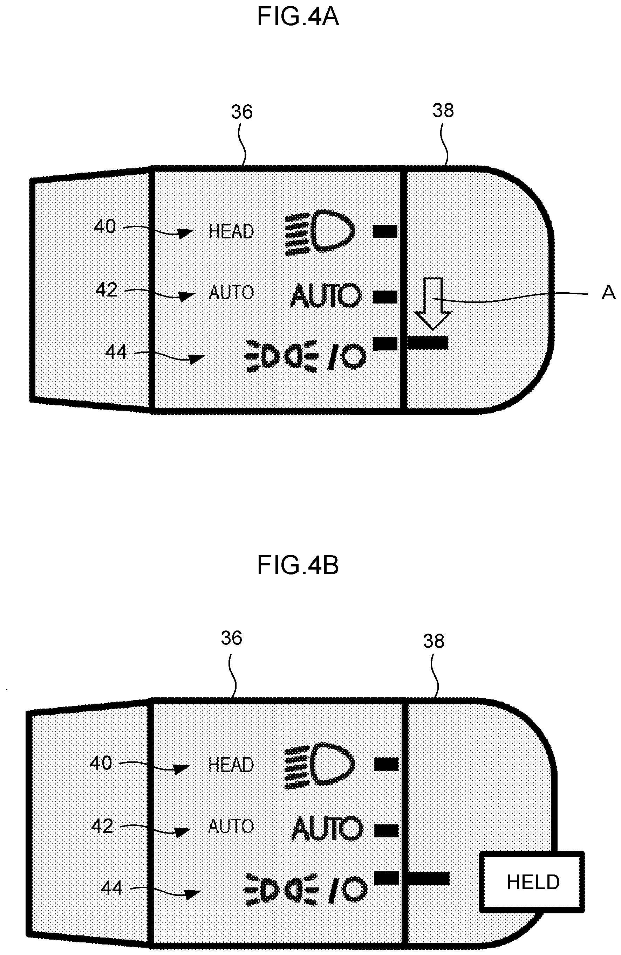

The rotary operator 38 is provided at a distal end portion of the lever main body 36 so as to be rotatable around the axis of the lever main body 36. As illustrated in Fig. 4A and Fig. 4B, as rotation positions of the rotary operator 38, a light ON position (HEAD) 40 for instructing constant lighting of the headlight 28 and the small light 30, an automatic light position (AUTO) 42 for setting an automatic light mode in which the turning on and off of the headlight 28 and the small light 30 is controlled based on the luminance around the vehicle, and a small light position 44 for instructing to switch to a small light lighting mode in which the small light 30 is turned on are provided in this order along the rotation direction of the rotary operator 38.

The contact points of the light switch 34 are switched by a user, who is an occupant of the vehicle, rotating the rotary operator 38. The light switch 34 then outputs, to the light control ECU 22, switch contact information that indicates which one of the light ON position 40, the automatic light position 42, or the small light position 44 the rotary operator 38 is positioned at.

In a case in which the rotary operator 38 is positioned at the light ON position 40, the rotary operator 38 is held at the light ON position 40 even if there is no longer an operation force of a rotation operation by the user. Moreover, in a case in which the rotary operator 38 is positioned at the automatic light position 42, the rotary operator 38 is held at the automatic light position 42 even if there is no longer the operation force of the rotation operation by the user.

On the other hand, the light switch 34 is provided with a momentary mechanism that, in a case in which the rotary operator 38 is positioned between the automatic light position 42 and the small light position 44, automatically returns the rotary operator 38 to the automatic light position 42 when there is no longer the operation force of the rotation operation by the user. The momentary mechanism can be implemented by, for example, using a spring mechanism, which is not illustrated in the drawings, to continuously apply a rotation urging force to the rotary operator 38 at the small light position 44 toward an automatic light position 42 side to an extent that enables the user to perform a rotation operation.

The storage section of the light control ECU 22 stores a light control program that is not illustrated in the drawings. The light control ECU 22 functions as the light control section 24 illustrated in Fig. 1 by reading the light control program from the storage section and loading the light control program in the memory, and the light control program that has been loaded in the memory being executed by the CPU.

Based on the switch contact information that is input from the light switch 34, in a case in which the rotary operator 38 is positioned at the light ON position 40, the light control section 24 turns on all of the headlights 28 and the small lights 30 regardless of the luminance around the vehicle (day or night). Moreover, in a case in which the rotary operator 38 is positioned at the automatic light position 42, if the luminance around the vehicle exceeds a predetermined value (during daytime or the like), the light control section 24 turns off all of the headlights 28 and the small lights 30, and if the luminance around the vehicle is less than or equal to a predetermined value, the light control section 24 turns on all of the headlights 28 and the small lights 30.

Moreover, in a case in which the rotary operator 38 is held at the small light position 44 against the rotation urging force of the momentary mechanism, the light control section 24 performs the light control processing described below. It should be noted that the operation lever 32, which includes the lever main body 36 and the rotary operator 38, and the light control ECU 22, which functions as the light control section 24, are examples of a light control device according to the present invention.

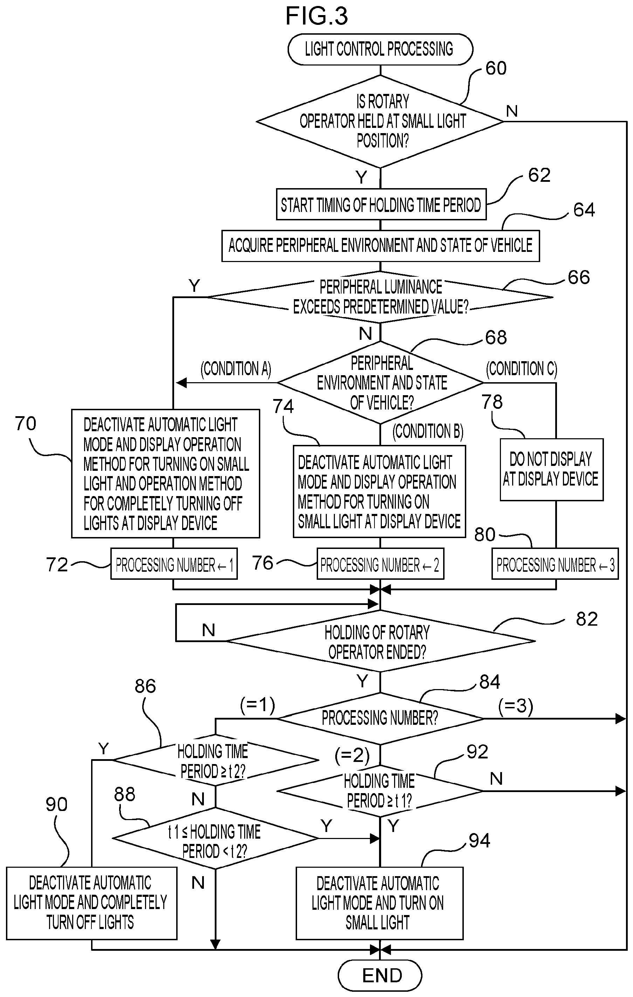

Next, as operation of the present exemplary embodiment, explanation follows regarding light control processing that is executed by the light control section 24, with reference to Fig. 3. It should be noted that the light control processing is repeatedly executed by the light control section 24 while a user is onboard the vehicle.

At step 60 of the light control processing, the light control section 24 determines whether or not the rotary operator 38 is held at the small light position 44 against the rotation urging force of the momentary mechanism. In a case in which the determination at step 60 is negative, the light control processing is ended. On the other hand, after the rotary operator 38 has been rotated to the small light position 44 against the rotation urging force of the momentary mechanism as illustrated by the arrow A in Fig. 4A, in a case in which the rotary operator 38 is held at the small light position 44 as illustrated in Fig. 4B, the determination at step 60 is affirmative, and the processing transitions to step 62. At step 62, the light control section 24 starts timing a period of time (a holding time period) during which the rotary operator 38 is held at the small light position 44.

At step 64, the light control section 24 acquires the peripheral environment of the vehicle and the state of the vehicle. Namely, as the peripheral environment of the vehicle, the light control section 24 acquires the luminance around the vehicle from the surrounding environment determination ECU 18. Further, the light control section 24 acquires, as the state of the vehicle, the vehicle speed of the vehicle from the vehicle speed determination ECU 12, acquires the shift position of the vehicle from the shift position determination ECU 14, and acquires the operating state of the parking brake of the vehicle from the parking brake ECU 16. Moreover, the light control section 24 acquires a state of an ignition switch of the vehicle as the state of the vehicle. In a case in which the acquired state of the ignition switch of the vehicle is "OFF", the light control section 24 determines that the drive system of the vehicle is suspended.

At step 66, the light control section 24 determines whether or not the peripheral luminance of the vehicle acquired at step 64 exceeds a predetermined value. The predetermined value at step 66 is set to a value for determining whether or not the peripheral environment is daytime or nighttime. Accordingly, at step 66, it is determined whether or not the surroundings of the vehicle are daytime. In a case in which the determination at step 66 is affirmative, the processing transitions to step 70, while in a case in which the determination at step 66 is negative, the processing transitions to step 68.

At step 68, the light control section 24 branches the processing based on the peripheral environment of the vehicle and the state of the vehicle acquired at step 64. More specifically, in a case in which the peripheral luminance of the vehicle is less than or equal to a predetermined value, and the drive system of the vehicle is suspended or the shift position is in parking or the parking brake is in operation (hereinafter referred to as "condition A"), the processing transitions to step 70. Further, in a case in which the peripheral luminance of the vehicle is less than or equal to the predetermined value and the shift position is not in parking and the parking brake is not in operation (hereinafter referred to as "condition B"), the processing transitions to step 74. Moreover, in a case in which the peripheral luminance of the vehicle is less than or equal to the predetermined value and the vehicle speed is higher than or equal to a predetermined vehicle speed (hereinafter referred to as "condition C"), the processing transitions to step 78.

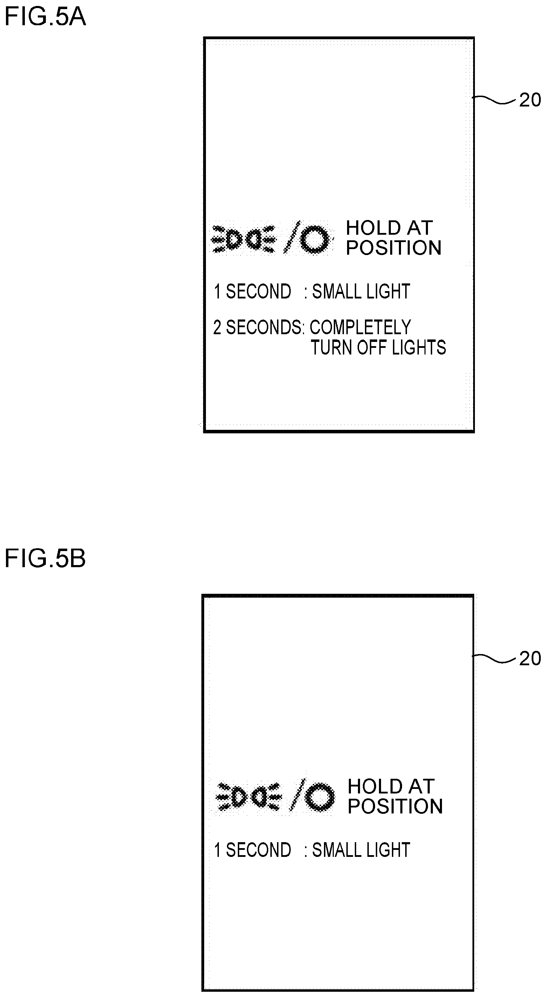

In a case in which the processing transitions to step 70 from step 66 or from step 68, as illustrated in Fig. 5A, the light control section 24 causes display of, at the display device 20, an operation method of deactivating the automatic light mode and turning on the small light 30, and an operation method of deactivating the automatic light mode and completely turning off the lights. In Fig. 5A, an operation method of deactivating the automatic light mode and turning on the small light 30 is an operation method of holding the rotary operator 38 at the small light position 44 for one second (or longer). Further, an operation method of deactivating the automatic light mode and completely turning off the lights is an operation method of holding the rotary operator 38 at the small light position 44 for two seconds (or longer). After performing the processing of step 70, the light control section 24 sets the processing number to "1" at the next step 72, and the processing transitions to step 82.

Moreover, in a case in which the processing transitions from step 68 to step 74, as illustrated in Fig. 5B, the light control section 24 causes display of, at the display device 20, an operation method of deactivating the automatic light mode and turning on the small light 30. In Fig. 5B, an operation method of deactivating the automatic light mode and turning on the small light 30 is an operation method of holding the rotary operator 38 at the small light position 44 for one second (or longer). After performing the processing of step 74, the light control section 24 sets the processing number to "2" at the next step 76, and the processing transitions to step 82.

Further, in a case in which the processing transitions from step 68 to step 78, the light control section 24 does not cause display of an operation method at the display device 20. The light control section 24 then sets the processing number to "3" at the next step 80, and the processing transitions to step 82.

At step 82, the light control section 24 determines whether or not the operation of holding the rotary operator 38 at the small light position 44 has ended. In a case in which the determination at step 82 is negative, step 82 is repeated until the determination is affirmative. In a case in which the determination at step 82 is affirmative, the timing of the holding time period is ended, and the processing transitions to step 84. At step 84, the light control section 24 then determines the processing number, and branches the processing in accordance with the processing number.

In a case in which the processing number is 1, the processing transitions from step 84 to step 86. At step 86, the light control section 24 determines whether or not the measured holding time period is longer than or equal to a second time period t2. It should be noted that a time period of, for example, approximately 2 seconds is set as the second time period t2. In a case in which the determination at step 86 is affirmative, the processing transitions to step 90. At step 90, the light control section 24 deactivates the automatic light mode and completely turns off the lights, and ends the light control processing.

In a case in which the determination at step 86 is negative, the processing transitions to step 88. At step 88, the light control section 24 determines whether or not the holding time period is longer than or equal to a first time period t1 and less than the second time period t2. It should be noted that a time of, for example, approximately 1 second is set as the first time period t1. In a case in which the determination at step 88 is affirmative, the processing transitions to step 94. Then, at step 94, the light control section 24 deactivates the automatic light mode and turns on the small light 30, and ends the light control processing. Further, in a case in which the determination at step 88 is negative, the light control processing is ended.

As described above, in a case in which the processing number is 1, that is, in a case in which the peripheral luminance of the vehicle exceeds the predetermined value, or in a case in which the above-described condition A is satisfied, the operation is performed in accordance with the operation method illustrated in Fig. 5A.

Moreover, in a case in which the processing number is 2, the processing transitions from step 84 to step 92. At step 92, the light control section 24 determines whether or not the holding time period is longer than or equal to first time period t1. In a case in which the determination at step 92 is affirmative, the processing transitions to step 94. Then, at step 94, the light control section 24 deactivates the automatic light mode and turns on the small light 30, and ends the light control processing. Further, in a case in which the determination at step 92 is negative, the light control processing is ended.

As described above, in a case in which the processing number is 2, that is, in a case in which the above-described condition B is satisfied, the operation is performed in accordance with the operation method illustrated in Fig. 5B. Further, in a case in which the processing number is 3, that is, in a case in which the above-described condition C is satisfied, the light control processing is ended.

As described above, in the present exemplary embodiment, the rotary operator 38 is provided at the distal end portion of the lever main body 36, and is rotatable at least between the automatic light position 42 for instructing to switch to the automatic light mode, and the small light position 44 for instructing to switch to the small light lighting mode in which the small light is turned on. Further, the lever main body 36 incorporates the light switch 34 that is provided with the momentary mechanism that automatically returns the rotary operator 38 to the automatic light position 42 when there is no longer the rotation operation force on the rotary operator 38 at a position between the automatic light position 42 and the small light position 44. Moreover, in a case in which the rotary operator 38 is at the small light position 44 for the first period of time, the light control section 24 deactivates the automatic light mode and switches to the small light lighting mode, and in a case in which the rotary operator 38 is at the small light position 44 for the second period of time, which is longer than the first period of time, the light control section 24 deactivates the automatic light mode and switches to a light off mode in which the lights are completely turned off. Further, in a case in which the rotary operator 38 is held at the small light position 44, in accordance with the peripheral environment and the state of the vehicle, the light control section 24 performs one of: (1) causing display of, at the display device 20, the operation condition for switching to the small light lighting mode and the operation condition for switching to the light off mode, (2) causing display of, at the display device 20, the operation condition for switching to the small light lighting mode, or (3) not causing display of an operation condition at the display device 20. This enables the user to recognize the operation condition by visually checking the operation condition that is displayed at the display device 20, enabling the occurrence of an operation error to be suppressed even until the user learns the procedure of an operation. Moreover, complicated display at the display device 20 can be suppressed.

## Claims

1. A light control device for a vehicle, comprising:
a rotary operator (38) that is rotatable at least between an automatic light position (42) for instructing to switch to an automatic light mode and a small light position (44) for instructing to switch to a small light lighting mode in which a small light is turned on; and
a lever main body portion (36) at which a light switch (34) is incorporated, the lever main body (36) having a distal end at which the rotary operator (38) is provided, and the light switch (34) being provided with a momentary mechanism configured to automatically return the rotary operator (38) to the automatic light position (42) when there is no longer a rotation operation force on the rotary operator (38) at a position between the automatic light position (42) and the small light position (44);
**characterized in that** the light control device further comprises
a display device (20); and
a light control section (24) configured to, in accordance with a predetermined peripheral environment and state of the vehicle and in a case in which the rotary operator (38) is held at the small light position (44) for a first period of time, deactivate the automatic light mode and switch to the small light lighting mode, and to, in accordance with a predetermined peripheral environment and state of the vehicle and in a case in which the rotary operator (38) is held at the small light position (44) for a second period of time, which is longer that the first period of time, deactivate the automatic light mode and switch to a light off mode in which lights are completely turned off,
wherein, in a case in which the rotary operator (38) is held at the small light position (44), in accordance with a peripheral environment and a state of the vehicle, the light control section (24) is configured to perform one of:
(1) causing display (70) of, at the display device (20), an operation condition of holding the rotary operator for the first period of time for switching to the small light lighting mode and an operation condition of holding the rotary operator for the second period of time for switching to the light off mode,
(2) causing display (74) of, at the display device (20), the operation condition of holding the rotary operator for the first period of time for switching to the small light lighting mode, or
(3) not causing display (78) of an operation condition at the display device (20).

2. The light control device according to claim 1, wherein:
in a case in which the rotary operator (38) is held at the small light position (44) and a peripheral luminance exceeds a predetermined value, or in a case in which the rotary operator (38) is held at the small light position (44), the peripheral luminance is less than or equal to the predetermined value, and a drive system of the vehicle is suspended or a shift position is in parking or a parking brake is in operation, the light control section (24) is configured to perform processing to (1) cause display (70) of, at the display device (20), the operation condition for switching to the small light lighting mode and the operation condition for switching to the light off mode.

3. The light control device according to claim 1 or 2, wherein:
in a case in which the rotary operator (38) is held at the small light position (44), a peripheral luminance is less than or equal to a predetermined value, a shift position is not in parking, and a parking brake is not in operation, the light control section (24) is configured to perform processing to (2) cause display (74) of, at the display device (20), the operation condition for switching to the small light lighting mode.

4. The light control device according to any one of claims 1 to 3, wherein:
in a case in which the rotary operator (38) is held at the small light position (44), a peripheral luminance is less than or equal to a predetermined value, and a vehicle speed is greater than or equal to a predetermined vehicle speed, the light control section (24) is configured to (3) not cause display (78) of an operation condition at the display device (20).

## Patentansprüche

1. Lichtsteuervorrichtung für ein Fahrzeug, umfassend:
einen Drehregler (38), der zumindest zwischen einer automatischen Lichtposition (42) zum Anweisen eines Umschaltens in einen automatischen Lichtmodus und einer Kleinlichtposition (44) zum Anweisen des Umschaltens in einen Kleinlicht-Beleuchtungsmodus, in dem ein Kleinlicht eingeschaltet wird, drehbar ist; und
einen Hebelhauptkörperabschnitt (36), in den ein Lichtschalter (34) integriert ist, wobei der Hebelhauptkörper (36) ein distales Ende aufweist, an dem der Drehregler (38) bereitgestellt ist, und der Lichtschalter (34) mit einem Momentmechanismus versehen ist, der konfiguriert ist, um den Drehregler (38) automatisch in die automatischen Lichtposition (42) zurückzustellen, wenn an einer Position zwischen der automatischen Lichtposition (42) und der Kleinlichtposition (44) keine Drehbetätigungskraft mehr auf den Drehregler (38) ausgeübt wird;
**dadurch gekennzeichnet, dass** die Lichtsteuervorrichtung ferner Folgendes umfasst
eine Anzeigevorrichtung (20); und
einen Lichtsteuerabschnitt (24), der konfiguriert ist, um gemäß einer vorbestimmten peripheren Umgebung und einem Zustand des Fahrzeugs und in einem Fall, in dem der Drehregler (38) über einen ersten Zeitraum in der Kleinlichtposition (44) gehalten wird, den automatischen Lichtmodus zu deaktivieren und in den Kleinlicht-Beleuchtungsmodus umzuschalten, und entsprechend einer vorbestimmten peripheren Umgebung und einem Zustand des Fahrzeugs und in einem Fall, in dem der Drehregler (38) über einen zweiten Zeitraum, der länger ist als der erste Zeitraum, in der Kleinlichtposition (44) gehalten wird, den automatischen Lichtmodus zu deaktivieren und in einen Licht-Aus-Modus umzuschalten, in dem Lichter vollständig ausgeschaltet sind,
wobei der Lichtsteuerabschnitt (24) in einem Fall, in dem der Drehregler (38) in der Kleinlichtposition (44) gehalten wird, gemäß einer peripheren Umgebung und einem Zustand des Fahrzeugs konfiguriert ist, um eines von Folgenden auszuführen:
(1) Veranlassen eines Anzeigens (70) an der Anzeigevorrichtung (20) einer Betriebsbedingung eines Haltens des Drehreglers über den ersten Zeitraum zum Umschalten in den Kleinlicht-Beleuchtungsmodus und einer Betriebsbedingung eines Haltens des Drehreglers über den zweiten Zeitraum zum Umschalten in den Licht-Aus-Modus,
(2) Veranlassen eines Anzeigens (74) an der Anzeigevorrichtung (20) der Betriebsbedingung eines Haltens des Drehreglers über den ersten Zeitraum zum Umschalten in den Kleinlicht-Beleuchtungsmodus, oder
(3) Nichtveranlassen eines Anzeigens (78) einer Betriebsbedingung an der Anzeigevorrichtung (20).

2. Lichtsteuervorrichtung nach Anspruch 1, wobei:
in einem Fall, in dem der Drehregler (38) in der Kleinlichtposition (44) gehalten wird und eine periphere Leuchtdichte einen vorbestimmten Wert überschreitet, oder in einem Fall, in dem der Drehregler (38) in der Kleinlichtposition (44) gehalten wird, die periphere Leuchtdichte kleiner als oder gleich wie der vorbestimmte Wert ist und ein Antriebssystem des Fahrzeugs ausgesetzt ist oder eine Schaltposition auf Parken ist oder eine Feststellbremse betätigt ist, der Lichtsteuerabschnitt (24) konfiguriert ist, um eine Verarbeitung auszuführen, um (1) ein Anzeigen (70) an der Anzeigevorrichtung (20) der Betriebsbedingung zum Umschalten in den Kleinlicht-Beleuchtungsmodus und der Betriebsbedingung zum Umschalten in den Licht-Aus-Modus zu veranlassen.

3. Lichtsteuervorrichtung nach Anspruch 1 oder 2, wobei:
in einem Fall, in dem der Drehregler (38) in der Kleinlichtposition (44) gehalten wird, eine periphere Leuchtdichte kleiner als oder gleich wie ein vorbestimmter Wert ist, eine Schaltposition nicht auf Parken ist und eine Feststellbremse nicht betätigt ist, der Lichtsteuerabschnitt (24) konfiguriert ist, um eine Verarbeitung auszuführen, um (2) ein Anzeigen (74) an der Anzeigevorrichtung (20) der Betriebsbedingung zum Umschalten in den Kleinlicht-Beleuchtungsmodus zu veranlassen.

4. Lichtsteuervorrichtung nach einem der Ansprüche 1 bis 3, wobei:
in einem Fall, in dem der Drehregler (38) in der Kleinlichtposition (44) gehalten wird, eine periphere Leuchtdichte kleiner als oder gleich wie ein vorbestimmter Wert ist und eine Fahrzeuggeschwindigkeit größer als oder gleich wie eine vorbestimmten Fahrzeuggeschwindigkeit ist, der Lichtsteuerabschnitt (24) konfiguriert ist, um (3) ein Anzeigen (78) einer Betriebsbedingung an der Anzeigevorrichtung (20) nicht zu veranlassen.

## Revendications

1. Dispositif de commande de lumière pour un véhicule, comprenant :
un dispositif d'actionnement rotatif (38) qui peut tourner au moins entre une position d'éclairage automatique (42) pour donner l'instruction de basculer vers un mode d'éclairage automatique et une position de faible éclairage (44) pour donner l'instruction de basculer vers un mode d'éclairage à faible lumière dans lequel une faible lumière est allumée ; et
une partie de corps principal de levier (36) dans lequel un commutateur d'éclairage (34) est incorporé, le corps principal de levier (36) ayant une extrémité distale au niveau de laquelle est prévu le dispositif d'actionnement rotatif (38), et le commutateur d'éclairage (34) étant pourvu d'un mécanisme momentané configuré pour remettre automatiquement le dispositif d'actionnement rotatif (38) en position d'éclairage automatique (42) quand il n'y a plus une force d'opération de rotation sur le dispositif d'actionnement rotatif (38) dans une position entre la position d'éclairage automatique (42) et la position de faible éclairage (44) ;
**caractérisé en ce que** le dispositif de commande de lumière comprend en outre
un dispositif d'affichage (20) ; et
une section de commande de lumière (24) configurée pour, en fonction d'un environnement périphérique et d'un état du véhicule prédéterminés et dans un cas dans lequel le dispositif d'actionnement rotatif (38) est maintenu dans la position de faible éclairage (44) pendant une première durée, désactiver le mode d'éclairage automatique et basculer vers le mode d'éclairage à faible lumière, et pour, en fonction d'un environnement périphérique et d'un état du véhicule prédéterminés et dans un cas dans lequel le dispositif d'actionnement rotatif (38) est maintenu dans la position de faible éclairage (44) pendant une seconde durée, qui est plus longue que la première durée, désactiver le mode d'éclairage automatique et basculer vers un mode de lumière éteinte dans lequel les lumières sont complètement éteintes,
dans lequel, dans un cas dans lequel le dispositif d'actionnement rotatif (38) est maintenu dans la position de faible éclairage (44), en fonction d'un environnement périphérique et d'un état du véhicule, la section de commande de lumière (24) est configurée pour réaliser l'un de :
(1) provoquer l'affichage (70) de, sur le dispositif d'affichage (20), une condition d'opération de maintien du dispositif d'actionnement rotatif pendant la première durée pour basculer vers le mode d'éclairage à faible lumière et une condition d'opération de maintien du dispositif d'actionnement rotatif pour la seconde durée pour basculer vers le mode de lumière éteinte,
(2) provoquer l'affichage (74) de, sur le dispositif d'affichage (20), la condition d'opération de maintien du dispositif d'actionnement rotatif pendant la première durée pour basculer vers le mode d'éclairage à faible lumière, ou
(3) ne pas provoquer l'affichage (78) d'une condition d'opération sur le dispositif d'affichage (20).

2. Dispositif de commande de lumière selon la revendication 1, dans lequel :
dans un cas dans lequel le dispositif d'actionnement rotatif (38) est maintenu dans la position de faible éclairage (44) et une luminosité périphérique dépasse une valeur prédéterminée, ou dans un cas dans lequel le dispositif d'actionnement rotatif (38) est maintenu dans la position de faible éclairage (44), la luminosité périphérique est inférieure ou égale à la valeur prédéterminée, et un système d'entraînement du véhicule est suspendu ou une position de changement de vitesse est sur stationnement ou un frein à main est en fonction, la section de commande de lumière (24) est configurée pour réaliser un traitement pour (1) provoquer l'affichage (70) de, sur le dispositif d'affichage (20), la condition d'opération pour basculer vers le mode d'éclairage à faible lumière et la condition d'opération pour basculer vers le mode de lumière éteinte.

3. Dispositif de commande de lumière selon la revendication 1 ou 2, dans lequel :
dans un cas dans lequel le dispositif d'actionnement rotatif (38) est maintenu dans la position de faible éclairage (44), une luminosité périphérique est inférieure ou égale à une valeur prédéterminée, une position de changement de vitesse n'est pas sur stationnement, et un frein à main n'est pas en fonction, la section de commande de lumière (24) est configurée pour réaliser un traitement pour (2) provoquer l'affichage (74) de, sur le dispositif d'affichage (20), la condition d'opération pour basculer vers le mode d'éclairage à faible lumière.

4. Dispositif de commande de lumière selon l'une quelconque des revendications 1 à 3, dans lequel :
dans un cas dans lequel le dispositif d'actionnement rotatif (38) est maintenu dans la position de faible éclairage (44), une luminosité périphérique est inférieure ou égale à une valeur prédéterminée, et une vitesse de véhicule est supérieure ou égale à une vitesse de véhicule prédéterminée, la section de commande de lumière (24) est configurée pour (3) ne pas provoquer l'affichage (78) d'une condition d'opération sur le dispositif d'affichage (20).
